# EUROPEAN PATENT SPECIFICATION

(11) **EP 3 476 659 B1**
(45) Date of publication and mention of the grant of the patent: **02.02.2022**
(21) Application number: 18195683.0
(22) Date of filing: 20.09.2018
(51) Int. Cl.: B60R 13/08

(54) **FASTENING SYSTEM FOR FASTENING A COMPONENT ON A CARRIER COMPONENT**
BEFESTIGUNGSSYSTEM ZUR BEFESTIGUNG EINER KOMPONENTE AUF EINER TRÄGERKOMPONENTE
SYSTÈME DE FIXATION POUR FIXER UN COMPOSANT SUR UN COMPOSANT SUPPORT

(30) Priority: 26.09.2017 DE 102017122236
(43) Date of publication of application: 01.05.2019
(73) Proprietor: Illinois Tool Works Inc., Glenview, IL 60025 (US)
(72) Inventor: Santos, Nelson, 58644 Iserlohn (DE); da Rocha, Bruno, 58762 Altena (DE); Becker, Sven, 44807 Bochum (DE)
(74) Representative: HGF

(56) References cited:
- DE-A1-102005 024 864
- DE-A1-102007 026 568
- DE-U1- 29 819 782
- DE-U1-202016 102 795
- US-A1- 2013 034 377
- US-A1- 2014 017 032

## Description

The invention relates to a fastening system for fastening a component on a carrier component, preferably a carrier component of a vehicle. Such a fastening system is known from US 9 587 664 B2 . It comprises a fastening bolt, which is fitted through a through-passage opening of the component and can be fastened in a bore of a carrier component. The fastening bolt has pushed onto it a spring element which, in the assembled state, comes into resilient abutment against an upper side of the component, said upper side being directed toward the head of the fastening bolt. Also pushed onto the fastening bolt is a sleeve, which has an annular sleeve flange butting against an underside of the component, said underside being directed away from the upper side of the component. The sleeve also comprises an axial bushing portion, by way of which it is pushed onto the fastening bolt. The sleeve absorbs compressive forces which occur during the operation of the fastening bolt being installed. This means that the component which is to be fastened is subjected to only a relatively low load and is safeguarded against excessive stressing. The known fastening system provides stop means which predetermine an axial position of the fastening bolt in which the latter is drawn to a maximum extent out of the sleeve. In this position, the fastening bolt still projects to a relatively pronounced extent beyond the lower end of the sleeve. In some applications, it may be desired to reduce this amount of projection further. There is also a need, in some applications, to isolate the component from the carrier component as well as possible in terms of vibration and/or heat.

Proceeding from the prior art explained, the invention is based on the object of providing a fastening system of the type mentioned in the introduction which allows the fastening bolt to be drawn out of the fastening system to a great extent and, at the same time, achieves good isolation of the component from the carrier component.

DE 10 2005 024864 A1 discloses a heat shield, including at least one fastening opening for receiving a fastening means, with which the heat shield and a component can be joined to each other.

The invention achieves the object by the subject matter of claim 1. Advantageous configurations can be found in the dependent claims, the description and the figures.

The invention achieves the object by a fastening system for fastening a component on a carrier component, preferably a carrier component of a vehicle, comprising a fastening bolt, which can be fitted through a through-passage opening of the component and can be fastened in a fastening bore of the carrier component, and also an outer sleeve and an inner sleeve, which is mounted in an axially moveable manner in a through-passage opening of the outer sleeve, wherein the inner sleeve forms a through-passage opening for the fastening bolt, the fastening bolt being mounted in an axially moveable manner in said through-passage opening, and further comprising a first spring washer and a second spring washer, the first spring washer and/or the second spring washer comprising a collar extending in the axial direction of the outer sleeve and at least partially surrounding a central opening, wherein the first spring washer can be fitted onto the outer sleeve and is designed so that, in the state in which the component is fastened on the carrier component, it positions itself against a first side of the component, and wherein the second spring washer can likewise be fitted onto the outer sleeve and is designed so that, in the state in which the component is fastened on the carrier component, it positions itself against a second side of the component, said second side being located opposite the first side.

The carrier component may be a carrier component of a vehicle, for example of a passenger vehicle or a truck. For example, the carrier component may be an engine-block component. However, other carrier components are also possible. The component which is to be fastened may be, for example, a heat shield or some other thin component, for example a sheet-metal component. Once again, however, other components are also possible.

The fastening system according to the invention comprises five components, namely a fastening bolt, an outer sleeve, an inner sleeve and also a first and second spring washer. The inner sleeve may be of hollow-cylindrical design. It is likewise possible for the outer sleeve to be of hollow-cylindrical design. The fastening bolt may be a threaded bolt, of which the external thread can be screwed into a corresponding internal thread of a fastening bore of the carrier component. The fastening bolt may consist, for example, of metal. It is also possible for the first and second spring washers to consist of metal, for example a spring steel. They are of elastic design. The inner sleeve and the outer sleeve may consist, for example, of a metal material, for example a steel material.

The inner sleeve forms a through-passage opening into which the fastening bolt is inserted and in which the fastening bolt is mounted in an axially movable manner. At the same time, the outer sleeve forms a through-passage opening into which the inner sleeve is inserted, in particular together with the fastening bolt inserted into the inner sleeves, the fastening bolt correspondingly also passing through the outer sleeve. First of all the first spring washer is pushed onto the outer sleeve. For this purpose, the first spring washer has a corresponding central opening. In the assembled state, the first spring washer butts in a resiliently elastic manner on a first side, in particular an upper side of the component, said side being directed away from the carrier component. In the state explained above, in which the first spring washer has been pushed onto the outer sleeve and the inner sleeve has been inserted into the outer sleeve together with the fastening bolt, the fastening system is positioned on the first side of the component. The outer sleeve here passes through the through-passage opening of the component, and the second spring washer can then therefore likewise be pushed onto the outer sleeve from the second side of the component, for example an underside of the component, said side being directed toward the carrier component. In the assembled state, the second spring washer positions itself in a resiliently elastic manner on the second side of the component. It is possible for the two spring washers here to be arranged in an axially movable manner on the outer sleeve.

For continued assembly, the component is aligned, with the fastening system, in relation to the fastening bore of the carrier component and the fastening bolt is inserted, for example screwed, into the fastening bore of the carrier component. The component is thus fastened on the carrier component by means of the fastening system. By virtue of the first and second spring washers positioning themselves in a resiliently elastic manner on the component from the first and second sides, the component is isolated from the carrier component to good effect in terms of vibration. If the carrier component is, for example, a component which vibrates during operation, for example an engine-block component, it is advantageously the case that said vibration is essentially not transmitted to the component. Damage to the component or undesired noise formation is avoided. Moreover, the spring washers compensate for changes in size as a result of heat, which can occur for example in the case of carrier components which are heated to a pronounced extent during operation. This therefore provides for isolation in terms of heat as well.

According to the invention, furthermore, it is possible for the fastening bolt to be drawn to the greatest extent out of the fastening system. For this purpose, on the one hand, the fastening bolt is mounted in an axially movable manner in the inner sleeve, in which case it can be drawn out of the inner sleeve as far as a maximum axial position predetermined for example by suitable stop means. On the other hand, the inner sleeve is mounted in an axially movable manner in the outer sleeve, in which case the inner sleeve, in turn, can be drawn out of the outer sleeve as far as a maximum axial position predetermined for example by suitable stop means. This telescopic design provides for greater axial movement capability of the fastening bolt relative to the outer sleeve and therefore the carrier component or component.

According to one configuration, the outer sleeve and/or the inner sleeve can absorb the compressive forces which occur during the operation of the fastening bolt being fastened in the fastening bore, in which case the component is not subjected to any compressive forces which possibly compromise component integrity. For this purpose, it is possible, when the component is installed on the carrier component, for the bolt head to butt against that end of the outer and/or inner sleeve which is directed toward it and also for the opposite end of the outer and/or inner sleeve to butt against the carrier component. The outer sleeve and/or the inner sleeve are/is supported, on the one hand, on the bolt head, and on the other hand, on the carrier component and the component is optimally safeguarded. It is thus possible for the fastening bolt to be inserted to a maximum extent into the fastening bore of the carrier component without any risk to the component. The compressive forces which occur during the fastening operation can be absorbed here, in particular, in full by the outer sleeve or the inner sleeve. There is then no need for the respectively other sleeve to meet any particular requirements relating to compressive-force absorption.

According to a further advantageous configuration, it is possible for the fastening bolt, the inner sleeve, the outer sleeve and the first spring washer to be connectable to one another in captive fashion in a preassembly position. In this way, four of the five components of the fastening system are preassembled in a particularly user-friendly manner. This preassembly position can also form the delivery state of the fastening system, in which case it is necessary for just two parts to be delivered and handled at the assembly site, namely, on the one hand, the preassembled fastening bolt, inner sleeve, outer sleeve and first spring washer and, on the other hand, the second spring washer. This configuration also provides for straightforward preassembly on the component by virtue of first of all the component group made up of the fastening bolt, inner sleeve, outer sleeve and first spring washer being fitted onto the component, and plugged through the through-passage opening of the component, and then the second spring washer being plugged onto the outer sleeve from the other side of the component. In this preassembled state, it is then possible for the component, with the fastening system, to be straightforwardly aligned in relation to the carrier component for completion of assembly.

According to a further configuration, it is possible to provide first stop means, which predetermine a position of the fastening bolt in which the latter is drawn axially to a maximum extent out of the inner sleeve. For example, the fastening bolt and the inner sleeve may have such first stop means. The first stop means may comprise interacting first stop protrusions of the fastening bolt and of the inner sleeve. It is also possible for the inner sleeve and the outer sleeve to have two stop means, which predetermine a position of the inner sleeve in which the latter is drawn axially to a maximum extent out of the outer sleeve. The second stop means, in turn, may comprise interacting second stop protrusions of the inner sleeve and of the outer sleeve.

The aforementioned configurations can advantageously realize captive preassembly of the fastening bolt, inner sleeve and outer sleeve. The first stop means may comprise, for example, an annular stop protrusion or stop ring on the stem of the fastening bolt and stop protrusions provided on the inner side of the wall delimiting the through-passage opening of the inner sleeve. Of course, it would also nevertheless be possible for this arrangement to be reversed, for example an annular protrusion being formed on the inner side of the wall of the through-passage opening of the inner sleeve and a plurality of stop protrusions being formed on the stem of the fastening bolt. The stop protrusion or protrusions on the inner side of the wall of the through-passage opening of the inner sleeve here are formed, in particular, at an introduction end of the through-passage opening for the fastening bolt, in order to maximize the axial displacement path of the fastening bolt in the inner sleeve. The second stop means may comprise an annular stop protrusion, which is provided on an outer side of the wall of the inner sleeve, and stop protrusions formed on an inner side of the wall delimiting the through-passage opening of the outer sleeve. Once again, however, it is also conceivable for this configuration to be reversed, a plurality of stop protrusions being formed on the outer side of the wall of the inner sleeve and an annular stop protrusion being formed on the inner side of the wall of the outer sleeve. Once again in order to maximize the axial displacement path, in this case, of the inner sleeve in the outer sleeve, the stop protrusion or protrusions on the outer side of the wall of the inner sleeve are formed in the region of an inner-sleeve end which is located opposite the introduction opening and the stop protrusions on the inner side of the wall of the outer sleeve are formed in the region of an introduction end of the through-passage opening of the outer sleeve, said end being directed away, in the assembled state, from the component or carrier component.

According to a further configuration, the first stop means may comprise a stop sleeve, which can be fitted onto the fastening bolt. The stop sleeve may consist of a plastic material. In the preassembled state of the fastening system, it is located between the fastening bolt and inner sleeve. For example by way of a frictional fit or form fit, it can predetermine a position of the fastening bolt in which the latter is drawn axially to a maximum extent out of the inner sleeve.

For preassembly of the fastening bolt in the inner sleeve, the first stop means of the fastening bolt and inner sleeve can be guided past one another, with preferably elastic deformation taking place in the process. They are then secured against unintended release. Rather, a corresponding removal force would have to be deliberately applied anew. Correspondingly, for the preassembly of the inner sleeve in the outer sleeve, the second stop means of the inner and outer sleeves can be guided past one another, with preferably elastic deformation of the inner and/or outer sleeve taking place in the process. These are then also secured against unintended release. Rather, a corresponding removal force would have to be deliberately applied anew.

As already explained, the outer sleeve is designed in particular to be guided by way of a first end through the through-passage opening of the component. At its first end, the outer sleeve may have an annular cross-sectional widening, which prevents the release from the outer sleeve of the first spring washer and/or second spring washer once they have been fitted onto the outer sleeve. This forms a further constituent part for the captive preassembly. It is thus possible, in order to achieve the preassembly position, for the first spring washer to be forced over the annular cross-sectional widening, and pushed onto the outer sleeve, by virtue of a sufficient compressive force being applied, with elastic and/or plastic deformation taking place in the process. In the fitted-on state, the cross-sectional widening prevents unintended release of the first spring washer from the outer sleeve. In the preassembly position, the first spring washer is thus retained in captive fashion on the outer sleeve. However, it can be released from the outer sleeve again by virtue of a corresponding tensile force being applied, with elastic deformation taking place in the process. It is also possible, during assembly, for the second spring washer to be forced over the annular cross-sectional widening and pushed onto the outer sleeve, with elastic and/or plastic deformation taking place in the process, in which case said second spring washer is also retained on the outer sleeve. This provides for the preassembly of the fastening system according to the invention on the component as explained in the introduction.

The fastening bolt preferably has a head, of which the cross section is larger than the external diameter of the inner sleeve and/or than the through-passage opening of the outer sleeve. The bolt head prevents the situation where, once the fastening bolt has been inserted into the inner sleeve, it can fall out through the latter or, together with the inner sleeve, can fall out through the outer sleeve. The bolt head can also be used for the engagement of an assembly tool. Together with the first and second stop means, which define the positions in which the fastening bolt is drawn out axially to a maximum extent, it is ensured that the relevant parts of the fastening system are retained on one another in captive fashion in the preassembly position.

According to a further configuration, the outer sleeve may have an abutment flange, which surrounds an introduction end of the through-passage opening of the outer sleeve and against which a head of the fastening bolt comes into abutment when the component is fastened on the carrier component. The introduction end is that end of the through-passage opening which is directed toward the head of the fastening bolt. When the component is installed on the carrier component, the bolt head butts against the abutment flange, which is formed at one end of the outer sleeve. The opposite end of the outer sleeve (first end) butts against the carrier component. This means that a compressive force which occurs when the fastening bolt is being screwed into the fastening bore is reliably absorbed by the outer sleeve. The component is safeguarded.

The first spring washer and/or the second spring washer has/have a collar which extends in the axial direction of the outer sleeve and at least partially surrounds a central opening, by way of which it is pushed onto the outer sleeve. This collar reduces, or these collar portions reduce, possible tilting between the respective spring washer and the outer sleeve during assembly.

The invention also relates to a system made up of a fastening system according to the invention and of a carrier component, with a fastening bore for the fastening bolt, and of a component which is to be fastened on said carrier component and has a through-passage opening for the fastening bolt. The system can be located in particular in the state in which the component is fully installed on the carrier component. As already explained, the carrier component may be an engine-block component of a vehicle. As likewise already explained, the component may be, for example, a heat shield.

According to a further configuration, it is possible, in the state in which it is fastened on the carrier component, for the component to butt only against the first spring washer and second spring washer of the fastening system. In particular, the component does not butt directly against the outer sleeve. In this way, the component is isolated from the carrier component not just in terms of vibration but also in terms of heat. This may be advantageous, in particular, if the carrier component is a component which heats to a pronounced extent during operation, for example an engine-block component. Such carrier components can readily reach temperatures of up to 350°C during operation.

According to a further configuration, the carrier component may have a depression, which surrounds the fastening bore in an annular manner and is intended for accommodating the first end of the outer sleeve. The depression is adapted to the geometry of the first end of the outer sleeve. For example, the depression may be in the form of a circular ring with a diameter which is only slightly larger than the external diameter of the in particular circular-cylindrical, first end of the outer sleeve. The first end of the outer sleeve is then accommodated in an accurately fitting manner by the depression. This annular depression provides a centering function of the fastening system, in particular of the fastening bolt, in relation to the accommodating bore of the carrier component during assembly. Assembly is considerably simplified as a result.

An exemplary embodiment of the invention will be explained in more detail hereinbelow with reference to figures, in which, schematically:
- figure 1: shows an exploded illustration, partly in section, of a fastening system according to the invention,
- figure 2: shows a perspective illustration of the inner sleeve of the fastening system from figure 1,
- figure 3: shows a perspective illustration of the outer sleeve of the fastening system from figure 1,
- figure 4: shows a perspective illustration of a spring washer of the fastening system from figure 1,
- figure 5: shows a preassembly position of the fastening system shown in figure 1,
- figure 6: shows the fastening system from figure 5 in a partly assembled state,
- figure 7: shows the fastening system from figure 5 in a fully assembled state, and
- figure 8: shows the illustration from figure 7 for a different carrier component.

Unless specified to the contrary, the figures use like reference signs to indicate like objects.

The fastening system according to the invention comprises five components, namely a fastening bolt 10, an inner sleeve 12, an outer sleeve 14, a first spring washer 16 and a second spring washer 18. The fastening bolt 10 has a stem 20, which has for example an external thread for screwing into an internal thread of a fastening bore of a carrier component. Also formed on the stem 20 is a stop ring 22, which forms a stop protrusion. The fastening bolt 10 also has a head 24, with a head plate 26 and an engagement portion 28 for an assembly tool.

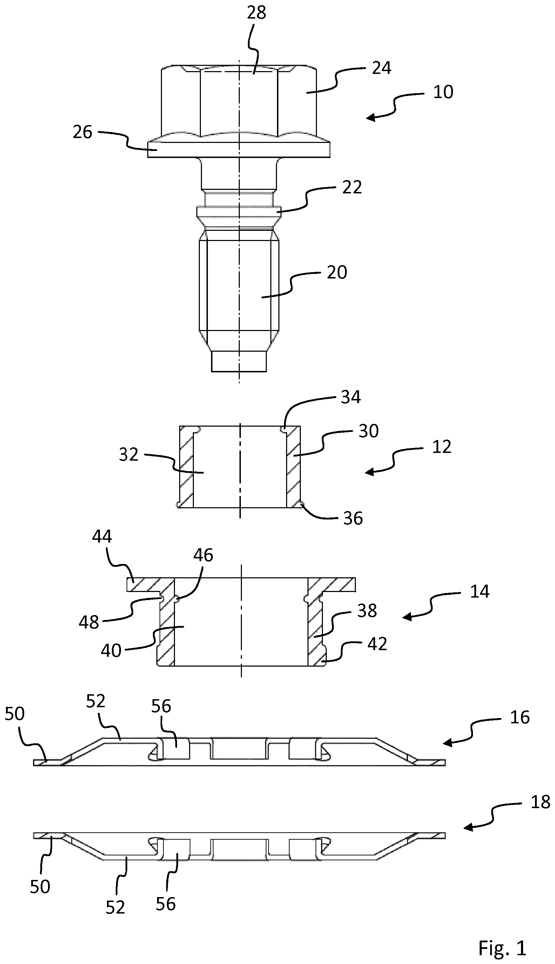

In the example shown, the inner sleeve 12 is of hollow-cylindrical design. It forms a through-passage opening 32 for the stem 20 of the fastening bolt 10, said through-passage opening being delimited by a sleeve wall 30. The introduction end of the through-passage opening 32, in figure 1 the upper end, is provided with, in the example shown, three stop protrusions 34, which are distributed uniformly over the circumference of the inner side of the sleeve wall 30. At the end which is located opposite the introduction end, an encircling stop ring 36 is formed on the outer side of the sleeve wall 30, said stop ring forming a stop protrusion. The inner sleeve 12 may consist, for example, of metal.

The outer sleeve 14 is likewise of hollow-cylindrical design. A sleeve wall 38 delimits a through-passage opening 40, into which the inner sleeve 12 can be inserted and through which can pass the stem 20 of the fastening bolt 10 together with the inner sleeve 12. At a first end, in figure 1 the lower end, the wall 38 of the outer sleeve 14 has an encircling cross-sectional widening 42. An encircling abutment flange 44 is formed at its opposite end, which forms an introduction end for the stem 20 of the fastening bolt 10. Moreover, in the vicinity of the upper end in figure 1, the inner side of the sleeve wall 38 is provided with, in the example illustrated, three stop protrusions 46, which are distributed uniformly over the circumference. The stop protrusions 46 may be formed, for example, by being impressed in the sleeve wall, this resulting in corresponding depressions 48 being formed on the outer side of the wall 38. Said depressions have no function here and, accordingly, can also be dispensed with. The outer sleeve 14 may, for example, likewise consist of metal.

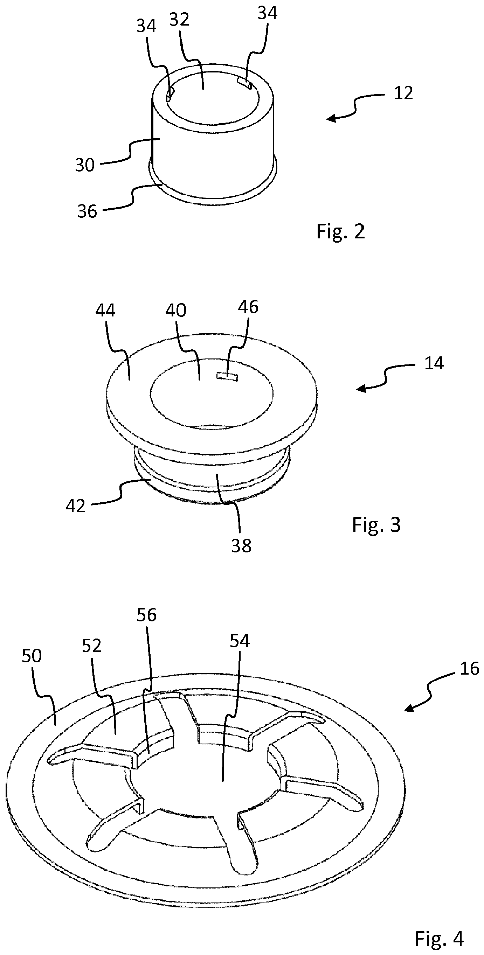

Figure 4 shows the first spring washer 16 of the fastening system according to the invention. Said first spring washer has a closed outer ring 50, from which a plurality of resilient lugs 52 extend radially inward. The resilient lugs 52, of which six are provided in the example illustrated, together form a central opening 54. It can also be seen in figure 4 that collar portions 56 are formed at the free end of each resilient lug 52, said collar portions extending in the axial direction of the central opening 54. Said collar portions 56 form a collar which partially surrounds the central opening 54. The first spring washer 16 may consist, for example, of a metal, in particular a spring steel. The second spring washer 18 is designed in a manner identical to the first spring washer 16. It is merely turned round for assembly purposes, as can be seen for example in figure 1.

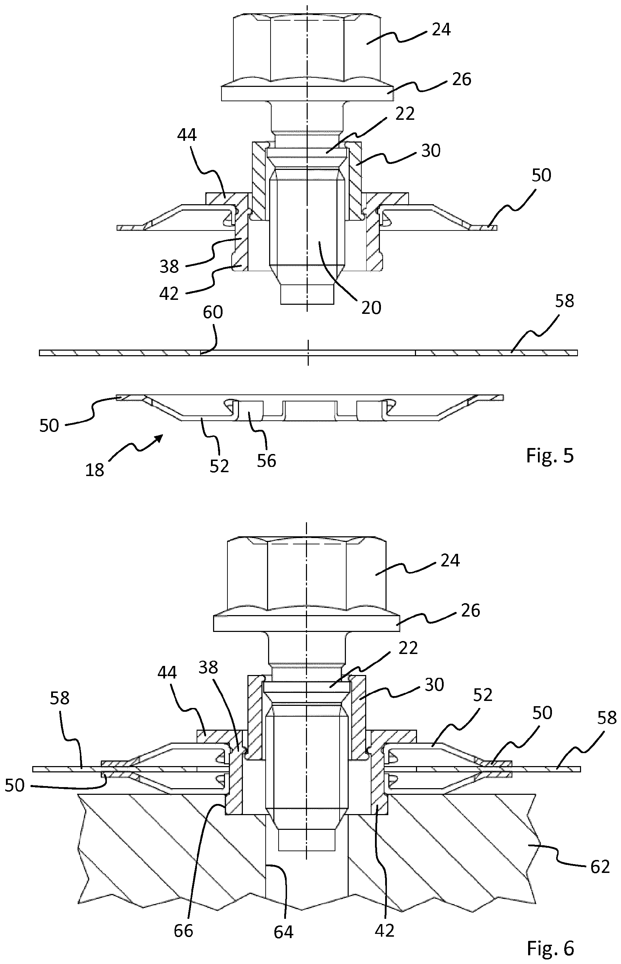

Figures 5 to 7 will be used to explain in more detail the operation of installing a component 58 with a through-passage opening 60 on a carrier component 62 with a fastening bore 64. As already explained, the fastening bore 64 has preferably an internal thread, which corresponds to the external thread of the fastening bolt 10. The component 58 may be, for example, a heat shield. The carrier component 62 may be, for example, an engine-block component. However, other components and/or carrier components are also possible.

Figure 5 shows the fastening system according to the invention in a preassembly position and prior to being installed on the component 58 and the carrier component 62. In this preassembly position, the fastening bolt 10, the inner sleeve 12, the outer sleeve 14 and the first spring washer 16 have been connected to one another in captive fashion. In order to achieve this preassembly position, the fastening bolt 10 is inserted, by way of its stem 20, into the through-passage opening 32 of the inner sleeve 12 and the inner sleeve 12 is inserted into the through-passage opening 40 of the outer sleeve 14. It is also the case that the first spring washer 16 is pushed, by way of its central opening 54, onto the wall 38 of the outer sleeve 14. Figure 5 shows the fastening bolt 10 in the position in which it is drawn axially to a maximum extent out of the inner sleeve 12 and the inner sleeve 12 in a position in which it is drawn axially to a maximum extent out of the outer sleeve 14. In this position, the stop ring 22 of the fastening bolt 10 comes into abutment against the stop protrusions 34 of the inner sleeve 12. The stop ring 36 of the inner sleeve 12 comes into abutment against the stop protrusions 46 of the outer sleeve 14. It is also the case that the annular cross-sectional widening 42 of the outer sleeve 14 prevents unintended release of the first spring washer 16 from the outer sleeve 14. It can also be seen in figure 5 that the cross section of the head plate 26 of the fastening bolt 10 has a larger cross section than the inner sleeve 12 and the through-passage opening 40 of the outer sleeve 14. This means that the aforementioned four components of the fastening system according to the invention are retained on one another in captive fashion in the preassembly position shown in figure 5.

Of course, it is necessary, for assembly purposes, for the interacting stop protrusions to be guided past one another to some extent. This can be achieved in each case with elastic deformation taking place and a corresponding compressive force being applied. Correspondingly, it is also possible for the components which are shown in a preassembled state in figure 5 to be released from one another again by an appropriate tensile force being applied. However, the components do not become released of their own accord, and they can therefore readily be delivered in this state, even combined into relatively large quantities, for example to an assembly site.

For continued preassembly, proceeding from the preassembly position shown in figure 5, first of all the outer sleeve 38 is pushed into the through-passage opening 60 of the component 58 and the second spring washer 18 is fitted onto the outer sleeve 14 from the opposite side of the component. The cross-sectional widening 42 of the outer sleeve 14 here, in turn, passes through the central opening 54 of the second spring washer 18, and it is therefore then also the case that the second spring washer 18, and with it the component 58, are connected in captive fashion to the rest of the components of the fastening system. In this preassembled state, it is possible for the component 58, together with the fastening system, to be aligned in relation to the carrier component 62 and be moved into the position which is shown in figure 6.

It should also be pointed out that the carrier component 62 has a depression 66, which surrounds the fastening bore 64 in an annular manner and is intended for accommodating the first end of the outer sleeve 14, in particular for accommodating the cross-sectional widening 42 of the outer sleeve 14. The depression 66 here has been adapted to the shape of the cross-sectional widening 42. In particular, the annular depression 66 has an accommodating diameter which is only insignificantly larger than the external diameter of the cross-sectional widening 42, the latter therefore being accommodated in an accurately fitting manner by the depression 66. This achieves centering of the fastening system, and thus of the fastening bolt 10, in relation to the fastening bore 64 of the carrier component 62, as can be seen in particular in the preassembly state shown in figure 6, prior to the fastening bolt 10 being screwed in.

For completion of assembly, the fastening bolt 10 is screwed into the fastening bore 64 of the carrier component 62 from the position which is shown in figure 6. In the definitively assembled state, the head plate 26 of the bolt head 24 comes into abutment against the abutment flange 44 of the outer sleeve 14. The opposite end of the outer sleeve 14, as can be seen in the figures, is supported on the carrier component 62 via the cross-sectional widening 42. In this way, the outer sleeve 14 absorbs the compressive forces which occur when the fastening bolt 10 is being screwed in, and said forces are therefore not transmitted to the component 58.

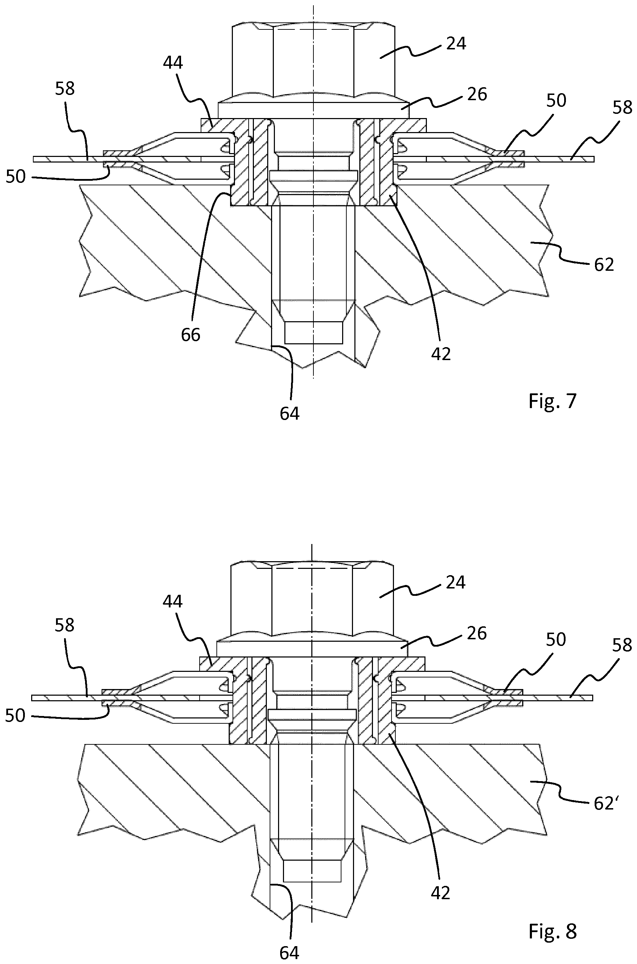

It can also be seen in figure 7 that, in the state in which it is definitively installed on the carrier component, the component 58 comes into contact only with the first and second spring washers 16, 18 and, in particular, not with the outer sleeve 14. This results in the component 58 being isolated from the carrier component 62 to particularly good effect in terms of vibration and heat. For removal purposes, it is possible for the fastening bolt 10 to be unscrewed again from the fastening bore 64 and then for the component 58 to be released from the carrier component 62. In order also for the fastening system to be removed from the component 58, the second spring washer 18 can then be drawn off from the outer sleeve 14 over the cross-sectional widening 42, with elastic deformation taking place in the process.

Figure 8 shows the same illustration as shown in figure 7, but for a different carrier component 62'. The latter carrier component 62' differs from the example shown in figures 6 and 7 merely in that it has no depression 66. Accordingly, the outer sleeve 14 rests on the upper side of the carrier component 62'. Otherwise, the example from figure 8 corresponds to the example explained with reference to figures 1 to 7.

### List of reference signs

- 10: Fastening bolt
- 12: Inner sleeve
- 14: Outer sleeve
- 16: First spring washer
- 18: Second spring washer
- 20: Stem
- 22: Stop ring
- 24: Bolt head
- 26: Head plate
- 28: Engagement portion
- 30: Sleeve wall
- 32: Through-passage opening
- 34: Stop protrusions
- 36: Stop ring
- 38: Sleeve wall
- 40: Through-passage opening
- 42: Cross-sectional widening
- 44: Abutment flange
- 46: Stop protrusions
- 48: Depressions
- 50: Outer ring
- 52: Resilient lugs
- 54: Central opening
- 56: Collar portions
- 58: Component
- 60: Through-passage opening
- 62: Carrier component
- 62': Carrier component
- 64: Fastening bore
- 66: Depression

## Claims

1. A fastening system for fastening a component (58) on a carrier component (62, 62'), preferably a carrier component (62, 62') of a vehicle, comprising a fastening bolt (10), which can be fitted through a through-passage opening (60) of the component (58) and can be fastened in a fastening bore (64) of the carrier component (62, 62'), and also an outer sleeve (14) and an inner sleeve (12), which is mounted in an axially moveable manner in a through-passage opening (40) of the outer sleeve (14), wherein the inner sleeve (12) forms a through-passage opening (32) for the fastening bolt (10), the fastening bolt (10) being mounted in an axially moveable manner in said through-passage opening, and further comprising a first spring washer (16) and a second spring washer (18), wherein the first spring washer (16) can be fitted onto the outer sleeve (14) and is designed so that, in the state in which the component is fastened on the carrier component (62, 62'), it positions itself against a first side of the component (58), and wherein the second spring washer (18) can likewise be fitted onto the outer sleeve (14) and is designed so that, in the state in which the component is fastened on the carrier component (62, 62'), it positions itself against a second side of the component (58), said second side being located opposite the first side, **characterized in that** the first spring washer (16) and /or the second spring washer (18) comprises a collar (56) extending in the axial direction of the outer sleeve and at least partially surrounding a central opening (54).

2. The fastening system as claimed in claim 1, wherein the outer sleeve (14) and/or the inner sleeve (12) absorb/absorbs the compressive forces which occur during the operation of the fastening bolt (10) being fastened in the fastening bore.

3. The fastening system as claimed in either of the preceding claims, wherein the fastening bolt (10), the inner sleeve (12), the outer sleeve (14) and the first spring washer (16) can be connected to one another in captive fashion in a preassembly position.

4. The fastening system as claimed in one of the preceding claims, which provides first stop means, which predetermine a position of the fastening bolt (10) in which the latter is drawn axially to a maximum extent out of the inner sleeve (12).

5. The fastening system as claimed in claim 4, wherein the first stop means comprise interacting first stop protrusions (22, 34) of the fastening bolt (10) and of the inner sleeve (12).

6. The fastening system as claimed in claim 4, wherein the first stop means comprise a stop sleeve, which can be fitted onto the fastening bolt (10).

7. The fastening system as claimed in one of the preceding claims, wherein the inner sleeve (12) and the outer sleeve (14) have second stop means, which predetermine a position of the inner sleeve (12) in which the latter is drawn axially to a maximum extent out of the outer sleeve (14).

8. The fastening system as claimed in claim 7, wherein the second stop means comprise interacting second stop protrusions (36, 46) of the inner sleeve (12) and of the outer sleeve (14).

9. The fastening system as claimed in one of the preceding claims, wherein the outer sleeve (14) is designed to be guided by way of a first end through the through-passage opening (60) of the component (58).

10. The fastening system as claimed in claim 9, wherein, at its first end, the outer sleeve (14) has an annular cross-sectional widening (42), which prevents the release from the outer sleeve (14) of the first spring washer (16) and/or second spring washer (18) once they have been fitted onto the outer sleeve (14).

11. The fastening system as claimed in one of the preceding claims, wherein the outer sleeve (14) has an abutment flange (44), which surrounds an introduction end of the through-passage opening (40) of the outer sleeve and against which a head (24) of the fastening bolt (10) comes into abutment when the component (58) is fastened on the carrier component (62, 62').

12. A system made up of a fastening system as claimed in one of the preceding claims and of a carrier component (62, 62'), with a fastening bore (64) for the fastening bolt (10), and of a component (58), which is to be fastened on said carrier component and has a through-passage opening (60) for the fastening bolt (10).

13. The system as claimed in claim 12, wherein, in the state in which it is fastened on the carrier component, the component (58) butts only against the first spring washer and second spring washer (18) of the fastening system.

14. The system as claimed in either of claims 12 and 13, wherein the carrier component (62) has a depression (66), which surrounds the fastening bore (64) in an annular manner and is intended for accommodating the first end of the outer sleeve (14).

## Patentansprüche

1. Befestigungssystem zum Befestigen einer Komponente (58) auf einer Trägerkomponente (62, 62'), vorzugsweise einer Trägerkomponente (62, 62') eines Fahrzeugs, aufweisend einen Befestigungsbolzen (10), der durch eine Durchgangsöffnung (60) der Komponente (58) gesteckt und in einer Befestigungsbohrung (64) der Trägerkomponente (62, 62') befestigt werden kann, und außerdem eine äußere Hülse (14) und eine innere Hülse (12), die axial bewegbar in einer Durchgangsöffnung (40) der Außenhülse (14) montiert ist, wobei die innere Hülse (12) eine Durchgangsöffnung (32) für den Befestigungsbolzen (10) bildet, wobei der Befestigungsbolzen (10) axial bewegbar in der Durchgangsöffnung montiert ist, und ferner aufweisend eine erste Federscheibe (16) und eine zweite Federscheibe (18), wobei die erste Federscheibe (16) auf die äußere Hülse (14) gesteckt werden kann und so ausgebildet ist, dass sie, in dem Zustand, in dem die Komponente an der Trägerkomponente (62, 62') befestigt ist, sich an einer ersten Seite der Komponente (58) positioniert, und wobei die zweite Federscheibe (18) ebenfalls auf die äußere Hülse (14) gesteckt werden kann und so ausgebildet ist, dass sie, in dem Zustand, in dem die Komponente an der Trägerkomponente (62, 62') befestigt ist, sich an einer zweiten Seite der Komponente (58) positioniert, wobei die zweite Seite gegenüber der ersten Seite angeordnet ist, **dadurch gekennzeichnet, dass** die erste Federscheibe (16) und/oder die zweite Federscheibe (18) einen Kragen (56) aufweisen, der sich in der axialen Richtung der äußeren Hülse erstreckt und zumindest teilweise eine zentrale Öffnung (54) umgibt.

2. Befestigungssystem nach Anspruch 1, wobei die äußere Hülse (14) und/oder die innere Hülse (12) die Druckkräfte aufnimmt/aufnehmen, die im Betrieb des Befestigungsbolzens (10) auftreten, der in dem Befestigungsloch befestigt ist.

3. Befestigungssystem nach einem der vorhergehenden Ansprüche, wobei der Befestigungsbolzen (10), die innere Hülse (12), die äußere Hülse (14) und die erste Federscheibe (16) in einer Vormontagestellung unverlierbar miteinander verbunden werden können.

4. Befestigungssystem nach einem der vorhergehenden Ansprüche, das erste Anschlagmittel bereitstellt, die eine Position des Befestigungsbolzens (10) vorgeben, in der dieser maximal axial aus der inneren Hülse (12) herausgezogen ist.

5. Befestigungssystem nach Anspruch 4, wobei die ersten Anschlagmittel zusammenwirkende erste Anschlagvorsprünge (22, 34) des Befestigungsbolzens (10) und der inneren Hülse (12) aufweisen.

6. Befestigungssystem nach Anspruch 4, wobei die ersten Anschlagmittel eine Anschlaghülse aufweisen, die auf den Befestigungsbolzen (10) gesteckt werden kann.

7. Befestigungssystem nach einem der vorhergehenden Ansprüche, wobei die innere Hülse (12) und die äußere Hülse (14) zweite Anschlagmittel haben, die eine Position der inneren Hülse (12) vorgeben, in der diese maximal axial aus der äußeren Hülse (14) herausgezogen ist.

8. Befestigungssystem nach Anspruch 7, wobei die zweiten Anschlagmittel zusammenwirkende zweite Anschlagvorsprünge (36, 46) der inneren Hülse (12) und der äußeren Hülse (14) aufweisen.

9. Befestigungssystem nach einem der vorhergehenden Ansprüche, wobei die äußere Hülse (14) so ausgelegt ist, dass sie mittels eines ersten Endes durch die Durchgangsöffnung (60) der Komponente (58) zu führen ist.

10. Befestigungssystem nach Anspruch 9, wobei die äußere Hülse (14) an ihrem ersten Ende eine ringförmige Querschnittserweiterung (42) aufweist, die ein Lösen von der äußeren Hülse (14) der ersten Federscheibe (16) und/oder zweiten Federscheibe (18) nach dem Stecken auf die äußere Hülse (14) verhindert.

11. Befestigungssystem nach einem der vorhergehenden Ansprüche, wobei die äußere Hülse (14) einen Anlageflansch (44) hat, der ein Einführungsende der Durchgangsöffnung (40) der äußeren Hülse umgibt und gegen den ein Kopf (24) des Befestigungsbolzens (10) zur Anlage kommt, wenn die Komponente (58) an der Trägerkomponente (62, 62') befestigt ist.

12. System, das aus einem Befestigungssystem nach einem der vorhergehenden Ansprüche besteht und einer Trägerkomponente (62, 62'), mit einer Befestigungsbohrung (64) für den Befestigungsbolzen (10), und aus einer Komponente (58), die an der Trägerkomponente zu befestigen ist und eine Durchgangsöffnung (60) für den Befestigungsbolzen (10) hat.

13. System nach Anspruch 12, wobei, in dem Zustand, in dem sie an der Trägerkomponente befestigt ist, die Komponente (58) nur an der ersten Federscheibe und der zweiten Federscheibe (18) des Befestigungssystems anliegt.

14. System nach einem der Ansprüche 12 oder 13, wobei die Trägerkomponente (62) eine Vertiefung (66) hat, die die Befestigungsbohrung (64) ringförmig umgibt und zur Aufnahme des ersten Endes der äußeren Hülse (14) gedacht ist.

## Revendications

1. Système de fixation pour la fixation d'un élément (58) sur un élément porteur (62, 62'), de préférence un élément porteur (62, 62') d'un véhicule, comprenant un boulon de fixation (10), qui peut être ajusté à travers une ouverture de passage traversant (60) de l'élément (58) et peut être fixé dans un alésage de fixation (64) de l'élément porteur (62, 62'), et également un manchon extérieur (14) et un manchon intérieur (12), qui est monté de manière mobile axialement dans une ouverture de passage traversant (40) du manchon extérieur (14), dans lequel le manchon intérieur (12) forme une ouverture de passage traversant (32) pour le boulon de fixation (10), le boulon de fixation (10) étant monté de manière mobile axialement dans ladite ouverture de passage traversant, et comprenant en outre une première rondelle élastique (16) et une deuxième rondelle élastique (18),
dans lequel la première rondelle élastique (16) peut être ajustée sur le manchon extérieur (14) et est conçue de sorte que, dans l'état dans lequel l'élément est fixé sur l'élément porteur (62, 62'), il se positionne contre un premier côté de l'élément (58), et dans lequel la deuxième rondelle élastique (18) peut également être ajustée sur le manchon extérieur (14) et est conçue de sorte que, dans l'état dans lequel l'élément est fixé sur l'élément porteur (62, 62'), il se positionne contre un deuxième côté de l'élément (58), ledit deuxième côté étant situé à l'opposé du premier côté, **caractérisé en ce que** la première rondelle élastique (16) et/ou la deuxième rondelle élastique (18) comprend une collerette (56) s'étendant dans la direction axiale du manchon extérieur et entourant au moins partiellement une ouverture centrale (54).

2. Système de fixation selon la revendication 1, **caractérisé en ce que** le manchon extérieur (14) et/ou le manchon intérieur (12) absorbent/absorbe les forces de compression qui se produisent durant l'actionnement du boulon de fixation (10) étant fixé dans l'alésage de fixation.

3. Système de fixation selon l'une des revendications précédentes, **caractérisé en ce que** le boulon de fixation (10), le manchon intérieur (12), le manchon extérieur (14) et la première rondelle élastique (16) peuvent être reliés entre eux de manière imperdable dans une position de prémontage.

4. Système de fixation selon l'une quelconque des revendications précédentes, qui prévoit un premier moyen de butée qui prédéfinit une position du boulon de fixation (10) dans laquelle celui-ci est tiré axialement jusqu'à une extension maximum hors du manchon intérieur (12).

5. Système de fixation selon la revendication 4, dans lequel le premier moyen de butée comprend l'interaction des premières saillies de butée (22, 34) du boulon de fixation (10) et du manchon intérieur (12).

6. Système de fixation selon la revendication 4, dans lequel le premier moyen de butée comprend un manchon de butée, qui peut être ajusté sur le boulon de fixation (10).

7. Système de fixation selon l'une des revendications précédentes, **caractérisé en ce que** le manchon intérieur (12) et le manchon extérieur (14) présentent un deuxième moyen de butée qui prédéfinit une position du manchon intérieur (12) dans laquelle celui-ci est tiré axialement jusqu'à une extension maximum hors du manchon extérieur (14) .

8. Système de fixation selon la revendication 7, dans lequel le deuxième moyen de butée comprend l'interaction des deuxièmes saillies de butée (36, 46) du manchon intérieur (12) et du manchon extérieur (14).

9. Système de fixation selon l'une quelconque des revendications précédentes, **caractérisé en ce que** le manchon extérieur (14) est conçu pour être guidé par le biais d'une première extrémité à travers l'ouverture de passage traversant (60) de l'élément (58).

10. Système de fixation selon la revendication 9, **caractérisé en ce que** le manchon extérieur (14) présente, à sa première extrémité, un élargissement de section transversale annulaire (42), qui empêche le desserrage du manchon extérieur (14) de la première rondelle élastique (16) et/ou de la deuxième rondelle élastique (18) une fois qu'elles ont été ajustées sur le manchon extérieur (14) .

11. Système de fixation selon l'une quelconque des revendications précédentes, dans lequel le manchon extérieur (14) présente une bride de butée (44) qui entoure une extrémité d'introduction de l'ouverture de passage traversant (40) du manchon extérieur et contre laquelle une tête (24) du boulon de fixation (10) vient en butée lorsque l'élément (58) est fixé sur l'élément de support (62, 62').

12. Système composé d'un système de fixation selon l'une quelconque des revendications précédentes et d'un élément de support (62, 62'), avec un alésage de fixation (64) pour le boulon de fixation (10), et d'un élément (58) qui doit être fixé sur ledit élément de support et présente une ouverture de passage traversant (60) pour le boulon de fixation (10).

13. Système selon la revendication 12, dans lequel, dans l'état dans lequel il est fixé sur l'élément de support, l'élément (58) bute uniquement contre la première rondelle élastique et la deuxième rondelle élastique (18) du système de fixation.

14. Système selon l'une quelconque des revendications 12 ou 13, dans lequel l'élément de support (62) présente une dépression (66) qui entoure l'alésage de fixation (64) de façon annulaire et est destinée à la réception de la première extrémité du manchon extérieur (14).
